# EUROPEAN PATENT APPLICATION

(11) **EP 3 989 665 A1**
(43) Date of publication of application: **27.04.2022**
(21) Application number: 21779957.6
(22) Date of filing: 15.01.2021
(51) Int. Cl.: H04W 72/04, H04W 48/10, H04W 48/12, H04W 48/18

(54) **WIRELESS ACCESS NETWORK NODE DEVICE, UE, AND METHOD THEREFOR**

(30) Priority: 02.04.2020 JP 2020067095
(71) Applicant: NEC Corporation, 108-8001 Tokyo (JP)
(72) Inventor: FUTAKI, Hisashi, Tokyo 108-8001 (JP); TAMURA, Toshiyuki, Tokyo 108-8001 (JP)
(74) Representative: MacDougall, Alan John Shaw
(86) International application number: PCT/JP2021/001347
(87) International publication number: WO 2021/199582

(57) **Abstract**

A RAN node apparatus (1) transmits, to a User Equipment (UE) (3), in a cell served by the RAN node apparatus (10), information indicating a network slice supported by another RAN node (2) that can be used as a secondary node in dual connectivity in which the RAN node apparatus acts as a master node. This can contribute, for example, to allowing the UE to know a network slice supported by a potential secondary node of dual connectivity through a potential master node of the dual connectivity.

## Description

### Technical Field

The present disclosure relates to a radio communication network, especially network slicing.

### Background Art

The 5G system (5GS) supports network slicing (see, for example, Non-Patent Literature 1 and 2, especially Section 5.15 of Non-Patent Literature 1). Network slicing use Network Function Virtualization (NFV) and software-defined networking (SDN) technologies, thereby creating multiple virtualized logical networks on top of physical networks. Each virtualized logical network is called a network slice. A network slices provides specific network capabilities and network characteristics. A network slice instance (NSI) is defined as a set of network function (NF) instances and resources (e.g., computer processing resources, storage, and networking resources) in a core network (CN) for creating a single network slice. In addition, an NSI may be defined as a set of NF instances and resources in the CN and an access network (AN) (one or both of a Next Generation Radio Access Network (NG-RAN) and a Non-3GPP Interworking Function (N3IWF)).

A network slice is identified by an identifier known as Single Network Slice Selection Assistance Information (S-NSSAI). The S-NSSAI consists of a Slice/Service type (SST) and a Slice Differentiator (SD). The SST refers to the expected network slice behavior in terms of features and services. The SD is optional information and complements the SST to differentiate amongst multiple network slices of the same Slice/Service type.

An S-NSSAI can have standard values or non-standard values. Currently, standard SST values 1, 2, 3, and 4 are associated respectively with enhanced Mobile Broad Band (eMBB), Ultra Reliable and Low Latency Communication (URLLC), Massive Internet of Things (MIoT), and Vehicle to Everything (V2X) slice types. Anon-standard value of an S-NSSAI with identifies a single network slice within a specific Public Land Mobile Network (PLMN). In other words, non-standard values are PLMN-specific values, and associated with the PLMN ID of a PLMN that has assigned them. Each S-NSSAI ensures assists a network in selecting a particular NSI. A NSI may be selected via different S-NSSAIs. An S-NSSAI may be associated with different NSIs. A network slice may be uniquely identified by an S-NSSAI.

Meanwhile, Network Slice Selection Assistance Information (NSSAI) means a set of S-NSSAIs. Accordingly, one or more S-NSSAIs can be included in one NSSAI. There are multiple types of NSSAI, known as Configured NSSAI, Requested NSSAI, Allowed NSSAI, Rejected NSSAI, and Pending NSSAI.

A Configured NSSAI includes one or more S-NNSAIs each applicable to one or more PLMNs. For example, The Configured NSSAI is configured by a Serving PLMN and is applied to the Serving PLMN. Alternatively, the Configured NSSAI may be a Default Configured NSSAI. The Default Configured NSSAI is configured by the Home PLMN (HPLMN) and applies to any PLMNs for which no specific Configured NSSAI has been provided. For example, a radio terminal (User Equipment (UE)) is provisioned with the Default Configured NSSAI from a Unified Data Management (UDM) of the HPLMN via an Access and Mobility Management Function (AMF).

A Requested NSSAI is signaled by a UE to a network in, for example, a registration procedure, allowing the network to determine a serving AMF, at least one network slice and at least one NSIs, for this UE.

An allowed NSSAI is provided to a UE by a Serving PLMN and indicates one or more S-NSSAIs that the UE can use in the current Registration Area of the Serving PLMN. The Allowed NSSAI is determined by an AMF of the Serving PLMN, for example, during a registration procedure. Accordingly, the Allowed NSSAI is signaled to the UE by the network (i.e., AMF) and stored in memories (e.g., non-volatile memories) of both the AMF and the UE.

A Rejected NSSAI includes one or more S-NSSAIs rejected by the current PLMN. The Rejected NSSAI may be referred to as rejected S-NSSAIs. A S-NSSAI is rejected throughout the current PLMN or rejected in the current registration area. If an AMF rejects any of one or more S-NSSAIs included in the Requested NSSAI, for example, in a registration procedure of a UE, it includes them in the Rejected NSSAI. The Rejected NSSAI is signaled to the UE by the network (i.e., AMF) and stored in memories of both the AMF and the UE.

A Pending NSSAI indicates one or more S-NSSAIs for which Network Slice-Specific Authentication and Authorization (NSSAA)) is pending. A Serving PLMN shall perform NSSAA for S-NSSAIs of the HPLMN which are subject to NSSAA based on subscription information. In order to perform NSSAA, an AMF invokes an Extensible Authentication Protocol (EAP)-based authorization procedure. The EAP-based authentication procedure takes a relatively long time to obtain its outcome. Accordingly, whilst the AMF determines an Allowed NSSAI as described above during a registration procedure of a UE, it does not include S-NSSAIs subject to NSSAA in the Allowed NSSAI, but instead them in the Pending NSSAI. The Pending NSSAI is signaled to the UE by the network (i.e., AMF) and stored in memories of both the AMF and the UE.

The 3rd Generation Partnership Project (3GPP) will discussions on Release 17 in the first quarter of 2020. Enhancements to network slices will be discussed for Release 17 (see, for example, Non-Patent Literature 3, 4, and 5). Non-Patent Literature 3 proposes that a study is needed to support parameters contained in the Generic Slice Template (GST), proposed by the GSM Association, in the 5GS. Non-Patent Literature 4 proposes that it is necessary to study a mechanism for enabling a User Equipment (UE) to quickly access a cell that supports an intended slice. Non-Patent Literature 5 points out an issue that according to the current 3GPP specification, a UE needs to select an NG-RAN node to perform a registration procedure without knowing which NG-RAN node supports which network slice. Non-Patent Literature 5 proposes that it is necessary to consider how to select a particular cell that can be used to access the intended network slice.

### Citation List

### Non Patent Literature

[Non-Patent Literature 1] 3GPP TS 23.501 V16.3.0 (2019-12) "3rd Generation Partnership Project; Technical Specification Group Services and System Aspects; System Architecture for the 5G System (5GS); Stage 2 (Release 16)", December 2019
[Non-Patent Literature 2] 3GPP TS 23.502 V16.3.0 (2019-12) "3rd Generation Partnership Project; Technical Specification Group Services and System Aspects; Procedures for the 5G System (5GS); Stage 2 (Release 16)", December 2019
[Non-Patent Literature 3] Nokia, Nokia Shanghai Bell, ZTE, Sanechips, Telecom Italia, Sprint, NEC, KDDI; Deutsche Telekom, InterDigital, Orange, Vodafone, Verizon UK Ltd, UIC, ETRI, Broadcom, Lenovo, Cisco, Telefonica S.A., Huawei, China Mobile, CATT, " New WID Study on Enhancement of Network Slicing Phase 2", S2-1908583, 3GPP TSG-SA WG2 Meeting #134, Sapporo, Japan, 24-28 June 2019
[Non-Patent Literature 4] CMCC, Verizon, " Study on enhancement of RAN Slicing", RP-193254, 3GPP TSG-RAN meeting #86, Sitges, Barcelona, 9-12 December 2019
[Non-Patent Literature 5] Samsung, AT&T, Sprint, InterDigital, China Mobile, SK Telecom, Convida Wireless, ZTE, Apple, KDDI, " Key Issue on 5GC assisted cell selection to access network slice", S2-2001467, 3GPP TSG-SA WG2 Meeting #136 Ad-hoc, Incheon, Korea, 13-17 January 2020

### Summary of Invention

### Technical Problem

The inventors have studied network slicing and found various issues. In some implementations, an NG-RAN node that is able to function as a Master Node (MN) in Dual Connectivity (DC) (hereinafter referred to as potential or candidate MN) may be able to transmit information indicating network slices supported by the potential MN to a UE, through a cell provided by the potential MN. For example, the potential MN may broadcast system information (System Information Block (SIB)) indicating network slices supported by the potential MN, or transmit it via UE-dedicated signaling, in a cell of the potential MN.

However, it may be possible that while the potential MN does not support a network slice that a UE intends to use, another NG-RAN node that is able to function as an SN in DC (hereinafter referred to as a potential or candidate SN) supports this network slice. In such a case, it may be beneficial for the UE to be able to know a network slice supported by the potential SN through the potential MN.

One of the objects to be attained by embodiments disclosed herein is to provide apparatuses, methods, and programs that contribute to allowing a UE to know a network slice supported by a potential secondary node of dual connectivity through a potential master node of the dual connectivity. It should be noted that this object is merely one of the objects to be attained by the embodiments disclosed herein. Other objects or problems and novel features will be made apparent from the following description and the accompanying drawings.

### Solution to Problem

In a first aspect, a RAN node apparatus includes at least one memory and at least one processor coupled to the at least one memory. The at least one processor is configured to transmit to a User Equipment (UE), in a cell served by the RAN node apparatus, first information indicating a first network slice supported by another RAN node that can be used as a secondary node in dual connectivity in which the RAN node apparatus acts as a master node.

In a second aspect, a UE includes at least one memory and at least one processor coupled to the at least one memory. The at least one processor is configured to receive, in a cell served by a first radio access network (RAN) node, first information indicating a first network slice supported by a second RAN node that can be used as a secondary node in dual connectivity in which the first RAN node acts as a master node.

In a third aspect, a method performed by a RAN node apparatus includes transmitting to a User Equipment (UE), in a cell served by the RAN node apparatus, first information indicating a first network slice supported by another RAN node that can be used as a secondary node in dual connectivity in which the RAN node apparatus acts as a master node.

In a fourth aspect, a method performed by a UE includes receiving, in a cell served by a first radio access network (RAN) node, first information indicating a first network slice supported by a second RAN node that can be used as a secondary node in dual connectivity in which the first RAN node acts as a master node.

In a fifth aspect, a program includes instructions (software codes) that, when loaded into a computer, cause the computer to perform the method according to the above-described third or fourth aspect.

### Advantageous Effects of Invention

According to the above-described aspects, it is possible to provide apparatuses, methods, and programs that contribute to allowing a UE to know a network slice supported by a potential secondary node of dual connectivity through a potential master node of the dual connectivity.

### Brief Description of Drawings

FIG. 1 is a diagram showing a configuration example of a radio communication network according to an embodiment;
FIG. 2 is a sequence diagram showing an example of signaling according to an embodiment;
FIG. 3 is a flowchart showing an example of operation of a RAN node according to an embodiment;
FIG. 4 is a flowchart showing an example of operation of a UE according to an embodiment;
FIG. 5 is a flowchart showing an example of operation of a UE according to an embodiment;
FIG. 6 is a diagram for explaining an example of cell reselection by a UE according to an embodiment;
FIG. 7 is a sequence diagram showing an example of signaling according to an embodiment;
FIG. 8 is a sequence diagram showing an example of signaling according to an embodiment;
FIG. 9 is a sequence diagram showing an example of signaling according to an embodiment;
FIG. 10 is a block diagram showing a configuration example of a RAN node according to an embodiment;
FIG. 11 is a block diagram showing a configuration example of a UE according to an embodiment; and
FIG. 12 is a block diagram showing a configuration example of an AMF according to an embodiment.

### Description of Embodiments

Specific embodiments will be described hereinafter in detail with reference to the drawings. The same or corresponding elements are denoted by the same symbols throughout the drawings, and duplicated explanations are omitted as necessary for the sake of clarity.

Each of the embodiments described below may be used individually, or two or more of the embodiments may be appropriately combined with one another. These embodiments include novel features different from each other. Accordingly, these embodiments contribute to attaining objects or solving problems different from one another and contribute to obtaining advantages different from one another.

The following descriptions on the embodiments mainly focus on the 3rd Generation Partnership Project (3GPP) fifth generation mobile communication system (5G system (5GS)). Further, these embodiments will be described mainly for DC performed by a radio terminal (UE) and RAN nodes (NG-RAN) connected to the 5GC. Such a DC is called Multi-Radio Dual Connectivity (MR-DC). However, these embodiments may be applied to other radio communication systems that support network slicing and dual connectivity similar to those of the 5GS.

### First Embodiment

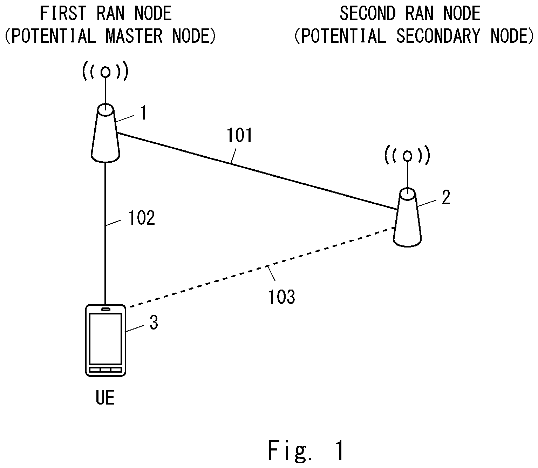

FIG. 1shows a configuration example of a radio communication network (i.e., 5GS) according to embodiments including this embodiment. In the examples of FIG. 1, the radio communication network includes Radio Access Network (RAN) nodes 1 and 2 and a UE 3. Each element (or network function) shown in FIG. 1 may be implemented, for example, as a network element on dedicated hardware, as a software instance running on dedicated hardware, or as a virtualization function instantiated on an application platform.

The RAN nodes 1 and 2 are arranged in RAN (i.e., NG-RAN). The RAN nodes 1 and 2 may be gNBs. The RAN nodes 1 and 2 may be Central Units (e.g., gNB-CUs) in cloud RAN (C-RAN) deployment.

In the example of FIG. 1, the first RAN node 1 and the second RAN node 2 can operate as a master node (MN) and a secondary node (SN) of dual connectivity (DC), respectively. In the following, the first RAN node 1 may be referred to as a potential (or candidate) MN, and the second RAN node 2 may be referred to as a potential SN.

The first RAN node (potential MN) 1 and the second RAN node (potential SN) 2 are able to exchange signaling messages on a control plane (CP) interface 101 (i.e., Xn-C interface). Further, the first RAN node (potential MN) 1 terminates a RAN-CN CP interface (i.e., N2 (or NG-C) interface) and interworks with an AMF on the RAN-CN CP interface. The AMF is one of the network functions within the 5GC control plane. On the other hand, the second RAN node (potential SN) 2 does not have to have a RAN-CN CP interface (i.e., N2 (or NG-C) interface) with any AMF.

The UE 3 can communicate with the first RAN node 1 via an air interface 102 in one or more cells provided by the first RAN node 1. Further, if one or more cells provided by the second RAN node 2 are available, the UE 3 may communicate simultaneously with the first and second RAN nodes 1 and 2 via the air interfaces 102 and 103 and perform dual connectivity (DC) between a master cell group (MCG) and a secondary cell group (SCG). The MCG is a group of serving cells associated with (or provided by) the first RAN node 1 acting as the MN in DC, and includes the SpCell (i.e., Primary Cell (PCell)) and optionally one or more Secondary Cells (SCells). Meanwhile, the SCG is a group of serving cells associated with (or provided by) the second RAN node 2 acting as an SN in DC, and includes the primary cell of the SCG and optionally one or more Secondary Cells (SCells). The primary cell of the SCG is referred to as Primary SCG cell (PSCell) or Primary Secondary Cell (PSCell). The PSCell is the Special Cell (SpCell) of the SCG.

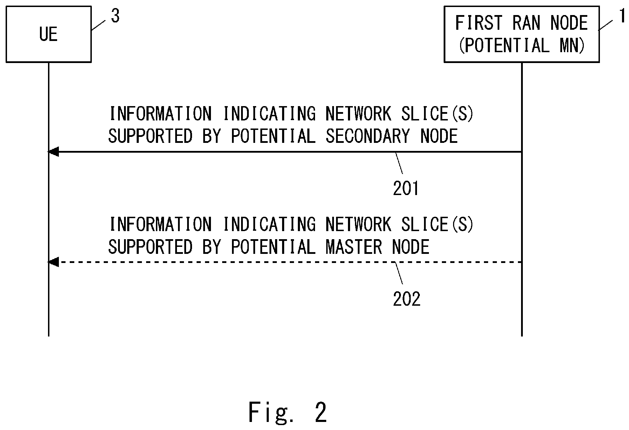

FIG. 2 shows an example of signaling between the first RAN node (potential MN) 1 and the UE 3 according to the present embodiment. In step 201, the first RAN node (potential MN) 1 transmits information (slice support information) indicating a network slice supported by the second RAN node (potential SN) 2 to the UE 3. In other words, the first RAN node 1 transmits, to the UE 3, slice support information indicating a network slice supported by the second RAN node 2 that can be used as an SN in DC where the first RAN node 1 acts as the MN. The Slice support information may include, for example, a list of one or more network slices.

The slice support information may indicate slice identifiers (i.e., S-NSSAIs) of one or more network slices supported by the second RAN node (potential SN) 2. More specifically, the slice support information may be associated with Tracking Areas (TAs) supported within the second RAN node (potential SN) 2, and may include a list of supported S-NSSAIs per TA supported by the second RAN node (potential SN) 2. Additionally, or alternatively, the slice support information may be associated with cells provided by the second RAN node (potential SN) 2, and may include a list of supported S-NSSAIs per cell served by the second RAN node (potential SN) 2. Additionally, or alternatively, the slice support information may be associated with a frequency (or frequency band) of cells provided by the second RAN node (potential SN) 2, and may include a list of supported S-NSSAIs per frequency (or frequency band) served by the second RAN node (potential SN) 2. One or more network slices supported by the second RAN node (potential SN) 2 may be preconfigured into the second RAN node (potential SN) 2, or may be configured (or changed as appropriate) by an Operation and Maintenance (O&M) apparatus.

In some implementations, the first RAN node 1 may transmit the slice support information, in one or more cells served by the first RAN node 1 via a non-UE associated signaling message. More specifically, the first RAN node 1 may broadcast the slice support information in one or more cells served by the first RAN node 1. Alternatively, the first RAN node 1 may transmit the slice support information to the UE 3 via a UE dedicated signaling message (e.g., Radio Resource Control (RRC) signaling).

The slice support information, which indicates a network slice(s) supported by the second RAN node (potential SN) 2, may be included in system information (System Information (SI)) transmitted in one or more cells served by the first RAN node 1. In the 5GS, the SI is divided into Minimum SI and Other SI. The Minimum SI is always being broadcast periodically and contains basic information required for initial access and information for acquiring any other SI. Specifically, the Minimum SI contains MIB and SIB type 1 (SIB1). Other SI includes all SIBs that are not broadcast within Minimum SI. These SIBs can be periodically broadcast, broadcast on-demand (i.e., upon judgement by the network (e.g., RAN node), or upon request from UEs in RRC_IDLE or RRC_INACTIVE), or sent in a dedicated manner to UEs in RRC_CONNECTED. The slice support information may be contained in, for example, SIB1 or in any of the other SIBs.

The second RAN node (potential SN) 2 may provide cells in a frequency band different from that of the cells provided by the first RAN node (potential MN) 1, and may support one or more network slices (S-NSSAIs) that are not included in the set of network slices (S-NSSAIs) supported by the first RAN node (potential MN) 1. Accordingly, the slice support information, which indicates network slices supported by the second RAN node (potential SN) 2, may indicate only network slices that are not supported by the first RAN node (potential MN) 1.

The UE 3 receives the slice support information indicating a network slice(s) supported by the second RAN node (potential SN) 2 in a cell served by the first RAN node (potential MN) 1. This allows the UE 3 to know the network slice(s) supported by the potential SN 2 via the potential MN 1. Thus, for example, the UE 3 may perform at least one of cell reselection, a registration procedure, a Protocol Data Unit (PDU) session establishment procedure, or a service request procedure, in or through the cell of the potential MN 1, while considering the network slice(s) supported by the second RAN node (potential SN) 2.

Returning to FIG. 2, the first RAN node (potential MN) 1 may further transmit information (slice support information) indicating a network slice(s) supported by the first RAN node (potential MN) 1 itself to the UE 3 (step 202). In other words, the first RAN node 1 may transmit slice support information indicating a network slice(s) supported by the first RAN node 1 to the UE 3 in one or more cells served by the first RAN node 1. The slice support information indicating the network slice(s) supported by the first RAN node 1 may be transmitted via any of the SIBs.

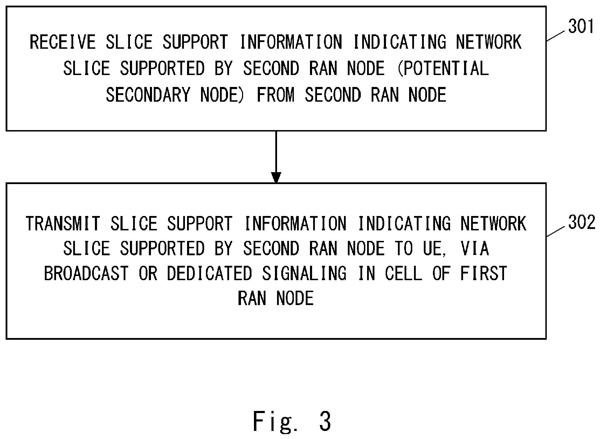

FIG. 3 shows an example of the operation of the first RAN node (potential MN) 1. In step 301, the first RAN node 1 receives slice support information indicating a network slice(s) supported by the second RAN node 2 from the second RAN node 2. As shown in FIG. 3, the slice support information may be a list of network slices. The first RAN node 1 may receive information on a network slice(s) supported by the second RAN node 2 via an XN SETUP REQUEST message or an XN SETUP RESPONSE message in a setup procedure of the Xn-C interface. More specifically, the first RAN node 1 may receive a TAI Support List IE and a TAI Slice Support List IE from the second RAN node 2. The TAI Support List IE indicates TAs supported in the second RAN node 2. The TAI Slice Support List IE is contained in the TAI Support List IE and indicates supported S-NSSAIs per TA (or TAI).

In step 302, the first RAN node (potential MN) 1 transmits slice support information indicating a network slice(s) supported by the second RAN node (potential SN) 2 to the UE 3, via broadcast (i.e., SIB) or dedicated signaling (e.g., RRC signaling) in a cell served by the first RAN node. The slice support information may be a list of one or more network slices (e.g., S-NSSAI (s)). The first RAN node 1 may explicitly or implicitly indicate a list of network slices supported by the cell of the first RAN node 1 and a list of network slices supported by a cell of the second RAN node 2. For example, when the first RAN node 1 transmits a list of network slices, it may imply that these network slices are supported in the cell of the first RAN node 1 (that is there may be no explicit association of these network slices with the cell of the first RAN node 1). Meanwhile, the first RAN node 1 may explicitly indicate whether or not each network slice included in this list is also supported in the cell of the second RAN node 2 (i.e., potential SN). Alternatively, the first RAN node 1 may transmit a separate list of network slices supported by the cell of the second RAN node 2, which is different than a list of network slices supported by the cell of the first RAN node 1. At this time, the first RAN node 1 may explicitly indicate that the list concerns network slices supported by the cell of the second RAN node 2, or the transmission of this list itself may imply that. In addition, the first RAN node 1 may also transmit in this cell a list of network slices supported in another cell provided by itself. When the first RAN node 1 transmits one or more lists of network slices supported by cells other than the serving cell in the serving cell, these lists may be lists for respective cells, frequencies, or frequency bands of the first and second RAN nodes.

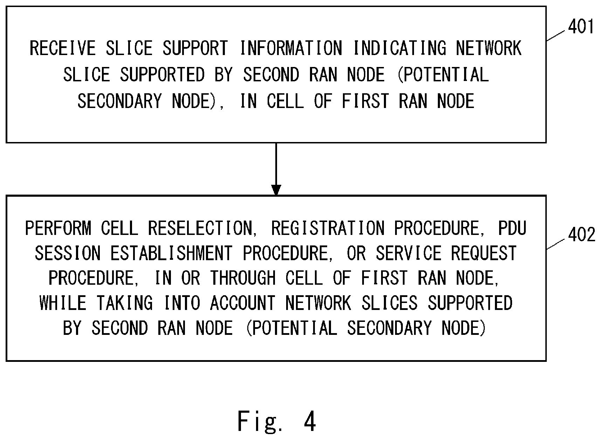

FIG. 4 shows an example of the operation of the UE 3. In step 401, the UE 3 receives a list of network slices supported by the second RAN node (potential SN) 2, via a cell served by the first RAN node (potential MN) 1. This allows the UE 3 to know the network slices supported by potential SN 2 via the potential MN 1.

In step 402, while taking into account the network slices supported by the second RAN node (potential SN) 2, the UE 3 performs at least one of cell reselection, a registration procedure, a PDU session establishment procedure, or a service request procedure, in or through the cell of the potential MN 1.

### Second Embodiment

A configuration example of a radio communication network according to present embodiment is the same as the example shown in FIG. 1. This embodiment provides a specific example of an operation of the UE 3 after receiving slice support information indicating one or more network slices supported by the second RAN node (potential SN) 2 from the first RAN node (potential MN) 1.

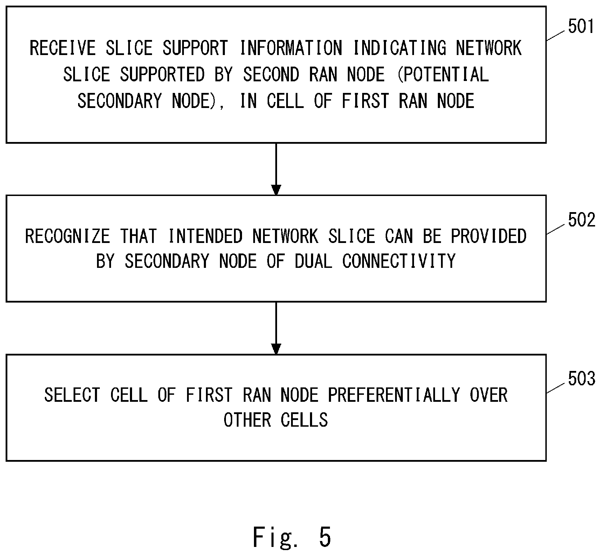

FIG. 5 shows an example of the operation of the UE 3. Step 501 is similar to step 401 in FIG. 4. Specifically, the UE 3 receives a list of network slices supported by the second RAN node (potential SN) 2, in a cell served by the first RAN node (potential MN) 1. This allows the UE 3 to know the network slice(s) supported by the potential SN 2 via the potential MN 1.

In step 502, the UE 3 recognizes that an intended network slice can be provided by a secondary node (SN) of dual connectivity (DC). Then, in step 503, the UE 3 performs cell reselection in a manner such that the cell of the first RAN node 1 where the intended network slice can be provided by the SN of DC is preferentially selected over the other cells.

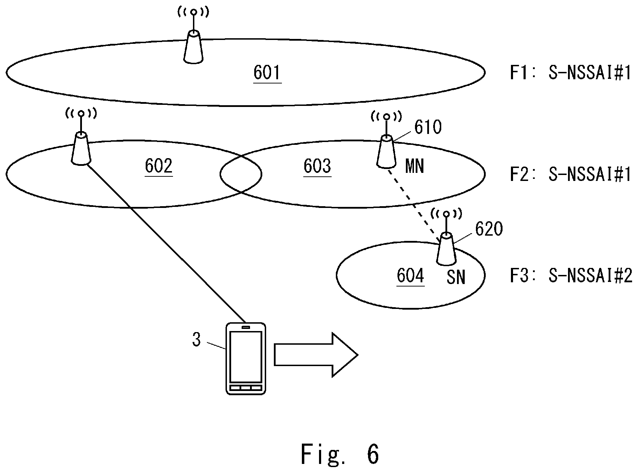

That is, the UE 3 reselects a cell from one or more cells including the potential MN of DC, taking into account network slices in a cell provided by the potential SN. This can increase the likelihood that the UE 3 will be able to use its intended network slice. A specific example of the cell reselection performed by the UE 3 will be described with reference to FIG 6. In the example of FIG. 6, a cell 601 uses frequency band F1 and supports a network slice of S-NSSAI #1 (e.g., eMBB slice type). Meanwhile, cells 602 and 603 support the network slice of S-NSSAI #1 (e.g., eMBB slice type), but these cells use frequency band F2. In addition, a cell 604 uses frequency band F3 and supports a network slice of S-NSSAI #2 (e.g., URLLC slice type). The Cell 603 is served by a potential MN 610, while the cell 604 is provided by a potential SN 620. The potential MN 610 and the potential SN 620 support dual connectivity (DC). The potential MN 610 corresponds to the first RAN node 1 and broadcasts slice support information indicating the network slice (S-NSSAI #2) supported by the cell 604 of the potential SN 620.

Consider the case where the UE 3 has camped on the cell 602 and is performing cell reselection. Further consider the case where the UE 3 is interested in a service provided by the network slice (e.g., URLLC slice type) of S-NSSAI #2. In this case, if the radio qualities of both the cell 601 and the cell 603 meet the cell reselection criteria, the UE 3 prioritizes the cell 603, in which the UE 3 is expected to be able to use the intended network slice (S-NSSAI #2) by performing DC, over the cell 610. In another example, when the UE 3 has camped on the cell 601 of FIG. 6, if the UE 3 detects cell 603 at some point and if the cell 603 meets the cell (re)selection criteria, the UE 3 may change its camping cell from the cell 601 to the cell 603.

### Third Embodiment

A configuration example of a radio communication network according to present embodiment is the same as the example shown in FIG. 1. This embodiment provides a specific example of an operation of the UE 3 after receiving slice support information indicating one or more network slices supported by the second RAN node (potential SN) 2 from the first RAN node (potential MN) 1.

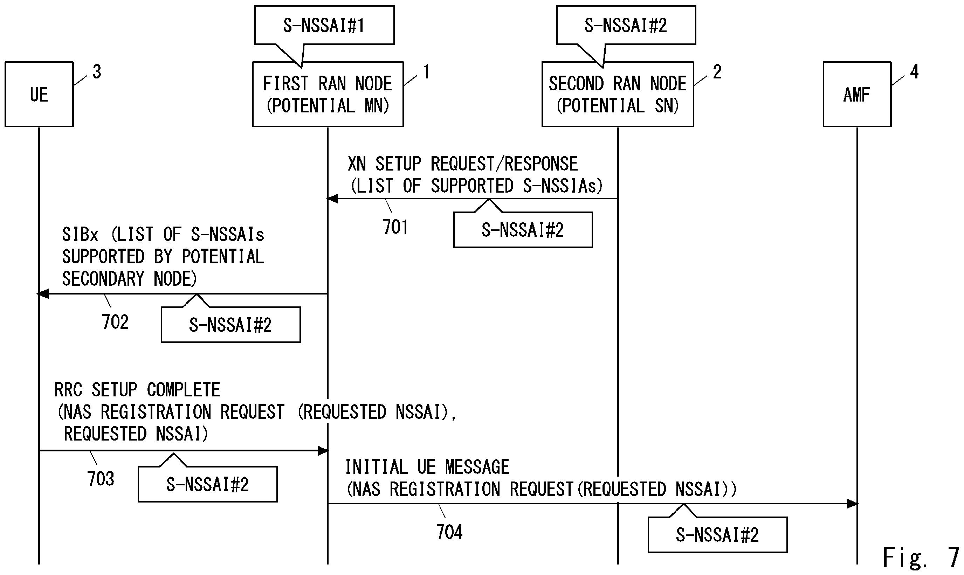

FIG. 7 shows an example of signaling according to the present embodiment. In step 701, the first RAN node 1 receives a list of network slices (including S-NSSAI #2) supported by the second RAN node 2 via an XN SETUP REQUEST message or an XN SETUP RESPONSE message. In step 702, the first RAN node 1 transmits to the UE 3, in a cell of the first RAN node 1, a list of network slices (including S-NSSAI #2) supported by the second RAN node 2. The list may be broadcast via a SIB. The first RAN node 1 may also transmit to the UE 3 a list of network slices (including S-NSSAI #1) supported by the first RAN node 1.

The UE 3 receives the list of network slices (including S-NSSAI #2) supported by the second RAN node (potential SN) 2 in the cell served by the first RAN node (potential MN) 1. This allows the UE 3 to know the network slices (including S-NSSAI #2) supported by potential SN 2 via the potential MN 1. The UE 3 recognizes that an intended network slice (here S-NSSAI #2) can be provided by a secondary node (SN) of dual connectivity (DC).

Steps 703 and 704 concern a registration procedure of the 5GS. The registration procedure of the 5GS is used, for example, for initial registration and mobility registration. The initial registration is used by a UE to connect to the network after power-on. The mobility registration is used by a UE when the UE moves out of its registration area or when the UE needs to update its capabilities or other parameters that have been negotiated in the registration procedure.

Specifically, in step 703, the UE 3 transmits an RRC Setup Complete message to the first RAN node 1. The RRC Setup Complete message includes AN parameters containing a Requested NSSAI and includes a NAS message (registration request message). The NAS message (registration request messages) also includes the Requested NSSAI. The Requested NSSAI includes S-NSSAI #2 supported by the second RAN node 2. In other words, the UE 3 incorporates S-NSSAI #2 into the list of requested network slices (i.e., Requested NSSAI) within the NAS message (registration request message) to be sent from the UE 3 to the core network (i.e., AMF 4 in 5GC) via the first RAN node 1. S-NSSAI #2 is a network slice identifier that is not supported by the first RAN node 1 but is supported by the second RAN node 2. The UE 3 also incorporates the same list of requested network slices (i.e., Requested NSSAI) into the AN parameters within the RRC Setup Complete message that carries the NAS message (registration request message).

The first RAN node 1 refers to the Requested NSSAI within the AN parameters received from the UE 4, and selects the AMF 4 based on the Requested NSSAI including S-NSSAI #2. In step 704, the first RAN node 1 sends the NAS message (registration request message) to the selected AMF 4 via an N2 (or NG-C) signaling message. The N2 signaling message may be an INITIAL UE MESSAGE message. The NAS message (registration request message) includes the Requested NSSAI including S-NSSAI #2. The AMF 4 may determine one or more network slices allowed for the UE, taking into account the network slices (S-NSSAI #2) supported by the second RAN node (potential SN) 2.

In this embodiment, the UE 3 performs a registration procedure via the cell of the potential MN of DC, in consideration of the network slice(s) in the cell provided by the potential SN of DC. This can increase the likelihood that the UE 3 will be able to use its intended network slice.

### Fourth Embodiment

A configuration example of a radio communication network according to present embodiment is the same as the example shown in FIG. 1. This embodiment provides a specific example of an operation of the UE 3 after receiving slice support information indicating one or more network slices supported by the second RAN node (potential SN) 2 from the first RAN node (potential MN) 1.

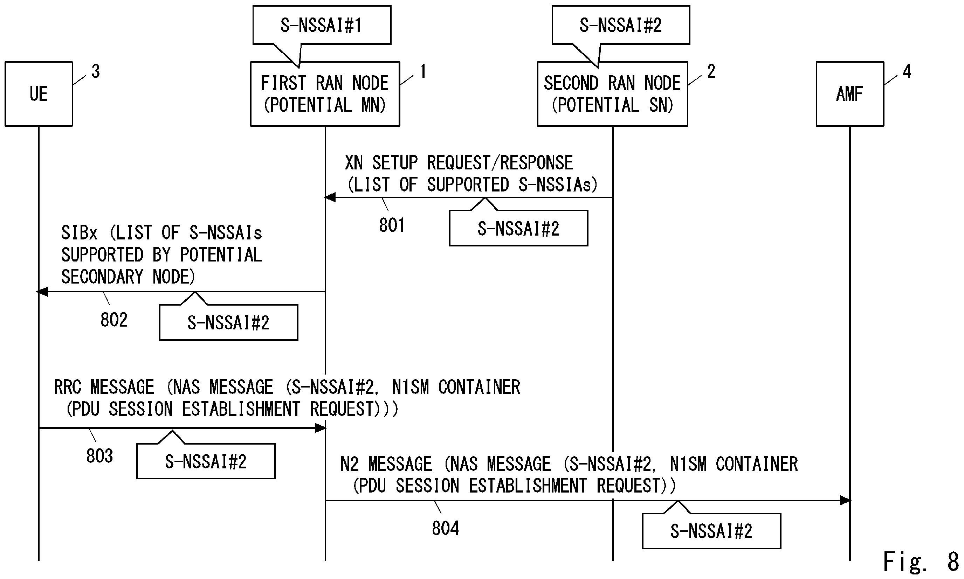

FIG. 8 shows an example of signaling according to the present embodiment. Steps 801 and 802 are similar to steps 701 and 702 in FIG. 7.

Steps 803 and 804 concern a PDU session establishment procedure of the 5GS. The PDU session establishment procedure is performed when a UE desires to establish a new PDU session to utilize a network slice (allowed S-NSSAI) already allowed for the UE by the 5GC.

In step 803, the UE 3 sends a PDU Session Establishment Request message specifying a network slice (S-NSSAI #2) provided by the potential SN 2 to the AMF 4 via a cell of the potential MN 1. More specifically, if the UE 3 recognizes that an allowed S-NSSAI (here, S-NSSAI #2) is supported in a cell of the potential SN 2, through an SIBx from the potential MN 1, if an upper layer (application layer) triggers a service to be provided via the allowed S-NSSAI, and if no PDU session associated with the allowed S-NSSAI (here, S-NSSAI #2) is established, the UE 3 sends the PDU Session Establishment Request message indicating S-NSSAI #2 via the cell of the potential MN 1.

In some implementations, an Access Stratum (AS) layer (i.e., RRC layer) of the UE 3 passes a list of network slices supported by the potential SN 2 to a NAS layer of the UE 3, in response to receiving the SIBx in step 802. Further, if the AS layer of the UE 3 receives a signal of the cell of the potential SN 2, it notifies the NAS layer of the UE 3 of this. If the NAS layer or a higher layer (application layer) triggers a service via the allowed S-NSSAI and if no PDU session associated with the allowed S-NSSAI (here, S-NSSAI #2) is established, the NAS layer of the UE 3 initiates a PDU session establishment procedure. Specifically, in step 803, the NAS layer of the UE 3 sends a PDU Session Establishment Request message specifying the network slice (S-NSSAI #2) that is provided by the potential SN 2 to the AMF 4 via the cell of the potential MN 1. This message may be further forwarded from the AMF 4 to an SMF.

The UE 3 generates a NAS message having an N1 Session Management (SM) container containing the PDU Session Establishment Request. The NAS message contains an S-NSSAI(s) (here, S-NSSAI #2) which is included in the allowed NSSAI of the UE 3 and is not supported by the potential MN 1 but is supported by the potential SN 2. The UE 3 then sends the NAS message to the first RAN node (potential MN) 1 via an RRC message. The RRC message may be a UL information transfer message. The first RAN node (potential MN) 1 receives the RRC message. In step 804, the first RAN node (potential MN) 1 forwards the NAS message including the PDU Session Establishment Request message to the AMF 4 via an N2 message. The N2 message may be an UPLINK NAS TRANSPORT message.

In this embodiment, the UE 3 performs a PDU session establishment procedure through a cell of the potential MN of DC, considering a network slice in a cell provided by the potential SN of DC. This can increase the likelihood that the UE 3 will be able to use its intended network slice.

### Fifth Embodiment

A configuration example of a radio communication network according to present embodiment is the same as the example shown in FIG. 1. This embodiment provides a specific example of an operation of the UE 3 after receiving slice support information indicating one or more network slices supported by the second RAN node (potential SN) 2 from the first RAN node (potential MN) 1.

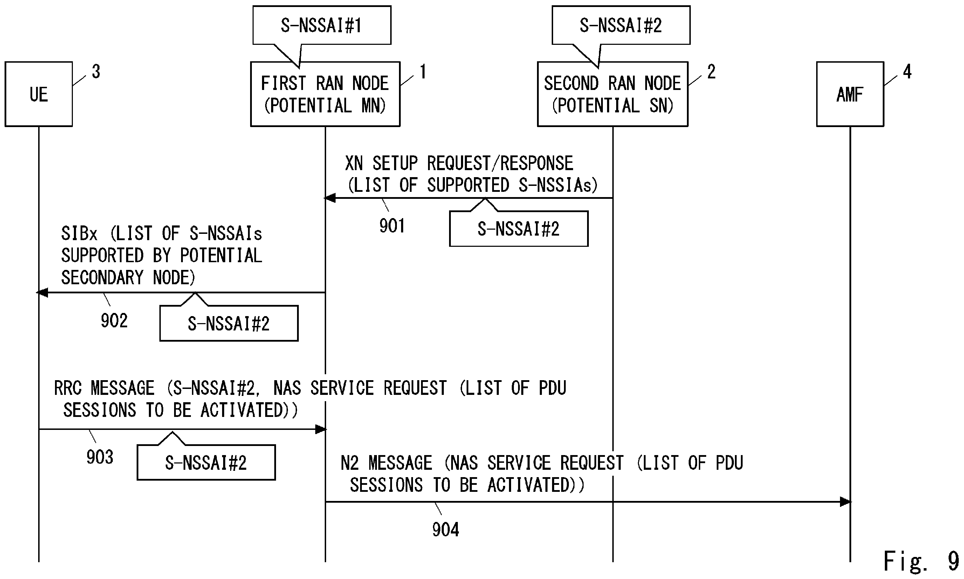

FIG. 9 shows an example of signaling according to the present embodiment. Steps 901 and 902 are similar to steps 701 and 702 in FIG. 7.

Steps 903 and 904 concern a service request procedure of the 5GS. The service request procedure is used by a UE in the Connection Management (CM)-IDLE state to request an establishment of a secure connection with an AMF. In addition, the service request procedure is performed by a UE in CM-IDLE or CM-CONNECTED to activate a user plane connection for an established PDU session.

In step 903, the UE 3 requests the 5GC, thorough the potential MN 1, to activate an established PDU session associated with a network slice (here S-NSSAI #2) that is not supported by the potential MN 1 but is supported by the potential SN 2. More specifically, if the UE 3 recognizes that an allowed S-NSSAI (here, S-NSSAI #2) is supported in a cell of the potential SN 2, through an SIBx from the potential MN 1, if an upper layer (application layer) triggers a service to be provided via the allowed S-NSSAI, and if a PDU session associated with the allowed S-NSSAI (here, S-NSSAI #2) has already been established, the UE 3 transmits an RRC message, including an Allowed NSSAI (including S-NSSAI # 2) and a NAS Service Request message, to the first RAN node (potential MN) 1. The RRC message may be an RRC Setup Complete message or a UL information transfer. The NAS Service Request message contains a list of PDU sessions to be activated.

In some implementations, an AS layer (i.e., RRC layer) of the UE 3 passes a list of network slices supported by the potential SN 2 to a NAS layer of the UE 3, in response to receiving the SIBx in step 902. Further, if the AS layer of the UE 3 receives a signal of the cell of the potential SN 2, it notifies the NAS layer of the UE 3 of this. If the NAS layer or a higher layer (application layer) triggers a service via the allowed S-NSSAI and if a PDU session associated with the allowed S-NSSAI (here, S-NSSAI #2) has been established, the NAS layer of the UE 3 initiates a service request procedure. Specifically, in step 903, the NAS layer of the UE 3 sends a Service Request message, thorough the cell of the potential MN 1, to request the AMF 4 to activate the PDU session associated with the network slice (S-NSSAI # 2) provided by the potential SN 2. This message may be further forwarded from the AMF 4 to an SMF.

The first RAN node 1 receives the RRC message from the UE 3 and selects the AMF 4 based on the Allowed NSSAI including S-NSSAI # 2. In step 904, the first RAN node 1 sends a NAS Service Request message to the selected AMF 4 via an N2 (or NG-C) signaling message. The N2 signaling message may be an INITIAL UE MESSAGE message or an UPLINK NAS TRANSPORT message.

In this embodiment, UE3 performs a service request procedure through a cell of the potential MN of DC in consideration of a network slice in a cell provided by the potential SN of DC. This can increase the likelihood that the UE 3 will be able to use its intended network slice.

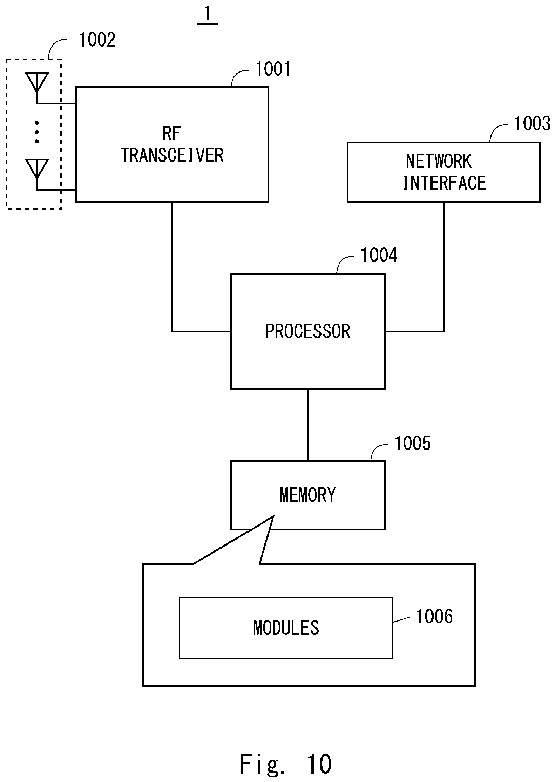

The following provides configuration examples of the RAN node 1, the RAN node 2, the UE 3, and the AMF 4 according to the above-described embodiments. FIG. 10 is a block diagram showing a configuration example of the RAN node 1 according to the above-described embodiments. The RAN node 2 may have a configuration similar to that shown in FIG. 10. Referring to FIG. 10, the RAN node 1 includes a Radio Frequency (RF) transceiver 1001, a network interface 1003, a processor 1004, and a memory 1005. The RF transceiver 1001 performs analog RF signal processing to communicate with UEs. The RF transceiver 1001 may include a plurality of transceivers. The RF transceiver 1001 is coupled to an antenna array 1002 and the processor 1004. The RF transceiver 1001 receives modulated symbol data from the processor 1004, generates a transmission RF signal, and supplies the transmission RF signal to the antenna array 1002. Further, the RF transceiver 1001 generates a baseband reception signal based on a reception RF signal received by the antenna array 1002 and supplies the baseband reception signal to the processor 1004. The RF transceiver 1001 may include an analog beamformer circuit for beam forming. The analog beamformer circuit includes, for example, a plurality of phase shifters and a plurality of power amplifiers.

The network interface 1003 is used to communicate with network nodes (e.g., other RAN nodes, AMF, and User Plane Function (UPF)). The network interface 1003 may include, for example, a network interface card (NIC) conforming to the IEEE 802.3 series.

The processor 1004 performs digital baseband signal processing (i.e., data-plane processing) and control-plane processing for radio communication. The processor 1004 may include a plurality of processors. The processor 1004 may include, for example, a modem processor (e.g., a Digital Signal Processor (DSP)) that performs digital baseband signal processing and a protocol stack processor (e.g., a Central Processing Unit (CPU) or a Micro Processing Unit (MPU)) that performs the control-plane processing.

The digital baseband signal processing by the processor 1004 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. The control-plane processing performed by the processor 1004 may include processing of Non-Access Stratum (NAS) messages, RRC messages, MAC CEs, and DCIs.

The processor 1004 may include a digital beamformer module for beam forming. The digital beamformer module may include a Multiple Input Multiple Output (MIMO) encoder and a pre-coder.

The memory 1005 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1005 may include a storage located apart from the processor 1004. In this case, the processor 1004 may access the memory 1005 via the network interface 1003 or an I/O interface.

The memory 1005 may store one or more software modules (computer programs) 1006 including instructions and data to perform processing by the RAN node 1 described in the above embodiments. In some implementations, the processor 1004 may be configured to load the software modules 1006 from the memory 1005 and execute the loaded software modules, thereby performing processing of the RAN node 1 described in the above embodiments.

When the RAN node 1 is a Central Unit (e.g., gNB-CU) in the C-RAN deployment, the RAN node 1 does not need to include the RF transceiver 1001 (and the antenna array 1002).

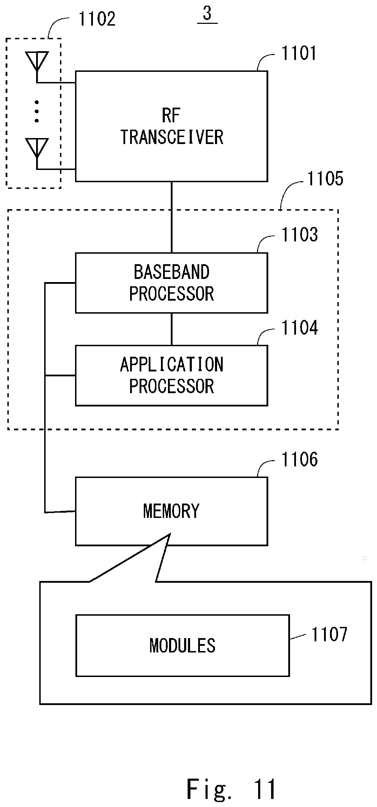

FIG. 11 is a block diagram showing a configuration example of the UE 3. A Radio Frequency (RF) transceiver 1101 performs analog RF signal processing to communicate with NG-RAN nodes. The RF transceiver 1101 may include a plurality of transceivers. The analog RF signal processing performed by the RF transceiver 1101 includes frequency up-conversion, frequency down-conversion, and amplification. The RF transceiver 1101 is coupled to an antenna array 1102 and a baseband processor 1103. The RF transceiver 1101 receives modulated symbol data (or OFDM symbol data) from the baseband processor 1103, generates a transmission RF signal, and supplies the transmission RF signal to the antenna array 1102. Further, the RF transceiver 1101 generates a baseband reception signal based on a reception RF signal received by the antenna array 1102 and supplies the baseband reception signal to the baseband processor 1103. The RF transceiver 1101 may include an analog beamformer circuit for beam forming. The analog beamformer circuit includes, for example, a plurality of phase shifters and a plurality of power amplifiers.

The baseband processor 1103 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame), (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1103 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. Further, the control-plane processing performed by the baseband processor 1103 may include processing of Non-Access Stratum (NAS) protocols, Radio Resource Control (RRC) protocols, and MAC Control Elements (CEs).

The baseband processor 1103 may perform Multiple Input Multiple Output (MIMO) encoding and pre-coding for beam forming.

The baseband processor 1103 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1104 described in the following.

The application processor 1104 is also referred to as a CPU, an MPU, a microprocessor, or a processor core. The application processor 1104 may include a plurality of processors (or processor cores). The application processor 1104 loads a system software program (Operating System (OS)) and various application programs (e.g., a call application, a WEB browser, a mailer, a camera operation application, and a music player application) from a memory 1106 or from another memory (not shown) and executes these programs, thereby providing various functions of the UE 3.

In some implementations, as represented by a dashed line (1105) in FIG. 11, the baseband processor 1103 and the application processor 1104 may be integrated on a single chip. In other words, the baseband processor 1103 and the application processor 1104 may be implemented in a single System on Chip (SoC) device 1105. An SoC device may be referred to as a Large-Scale Integration (LSI) or a chipset.

The memory 1106 is a volatile memory, a non-volatile memory, or a combination thereof. The memory 1106 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1106 may include, for example, an external memory device that can be accessed from the baseband processor 1103, the application processor 1104, and the SoC 1105. The memory 1106 may include an internal memory device that is integrated in the baseband processor 1103, the application processor 1104, or the SoC 1105. Further, the memory 1106 may include a memory in a Universal Integrated Circuit Card (UICC).

The memory 1106 may store one or more software modules (computer programs) 1107 including instructions and data to perform the processing by the UE 3 described in the above embodiments. In some implementations, the baseband processor 1103 or the application processor 1104 may load these software modules 1107 from the memory 1106 and execute the loaded software modules, thereby performing the processing of the UE 3 described in the above embodiments with reference to the drawings.

The control-plane processing and operations performed by the UE 3 described in the above embodiments can be achieved by elements other than the RF transceiver 1101 and the antenna array 1102, i.e., achieved by the memory 1106, which stores the software modules 1107, and one or both of the baseband processor 1103 and the application processor 1104.

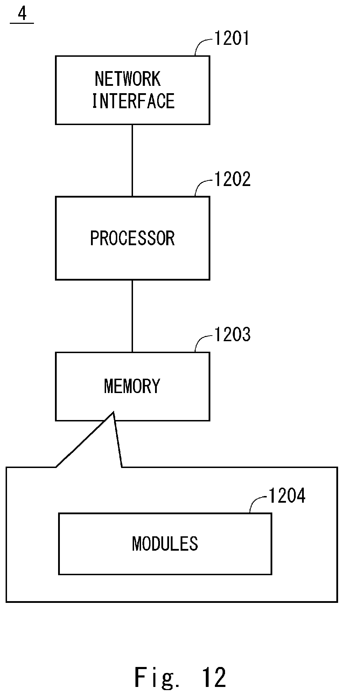

FIG. 12 is a block diagram showing a configuration example of the AMF 4. Referring to FIG. 12, the AMF 4 includes a network interface 1201, a processor 1202, and a memory 1203. The network interface 1201 is used to communicate, for example, with RAN nodes and with other network functions (NFs) or nodes in the 5GC. The other NFs or nodes in the 5GC include, for example, UDM, Session Management Function (SMF), Authentication Server Function (AUSF), and Policy Control Function (PCF). The network interface 1201 may include, for example, a network interface card (NIC) conforming to the IEEE 802.3 series.

The processor 1202 may be, for example, a microprocessor, a Micro Processing Unit (MPU), or a Central Processing Unit (CPU). The processor 1202 may include a plurality of processors.

The memory 1203 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1203 may include a storage located apart from the processor 1202. In this case, the processor 1202 may access the memory 1203 via the network interface 1201 or an I/O interface.

The memory 1203 may store one or more software modules (computer programs) 1204 including instructions and data to perform the processing of the AMF 4 described in the above embodiments. In some implementations, the processor 1202 may be configured to load the one or more software modules 1204 from the memory 1203 and execute the loaded software modules, thereby performing the processing of the AMF 4 described in the above embodiments.

As described above with reference to FIG. 10, 11, and 12, each of the processors that the RAN node 1, the RAN node 2, the UE 3, and the AMF 4 according to the above embodiments include executes one or more programs including instructions for causing a computer to execute an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

### Other Embodiments

The cell reselection by the UE 3 in the above embodiments may be performed as follows. For example, in a cell reselection process of (re)selecting a cell to camp, the UE 3 first considers the slice support information in candidate cells for cell reselection. That is, the UE 3 reads slice identifiers (i.e., S-NSSAIs) of one or more network slices supported in each candidate cell from a SIB, and chooses a cell(s) that supports at least one of network slices intended (or expected) by the UE 3. Then, if the chosen cell(s) includes a cell in which network slices of a cell provided by a potential SN is further broadcast in the SIB and they contain at least one of the network slices intended by the UE 3, the UE 3 may reselect this cell as the target for cell reselection. Alternatively, the UE 3 may select the one or more most intended (or expected) network slices, and then preferentially select a cell that provides these slices, or a cell whose SIB indicates that these slices are provided by an SN of dual connectivity (DC), as the target for cell reselection. The above control may be performed on condition that the cell to be reselected meets cell (re)selection criteria regarding radio quality, or may be performed without considering whether or not the criteria is satisfied.

Each of the above embodiments may be used individually, or whole or a part of the embodiments may be appropriately combined with one another.

The operations of the RAN node 1 and the AMF 3 described in the above embodiments is especially effective when the second RAN node (potential SN) 2 is responsible for only an SN for DC in the non-standalone deployment and has no RAN-CN CP interface with any AMF. That is, these operations can allow the UE to utilize a network slice that are only supported by SNs in the non-standalone deployments. However, these embodiments may be applied to deployment in which the second RAN node (potential SN) 2 has a RAN-CN CP interface with the AMF 3.

The above-described embodiments are merely examples of applications of the technical ideas obtained by the inventors. These technical ideas are not limited to the above-described embodiments and various modifications can be made thereto.

The whole or part of the embodiments disclosed above can be described as, but not limited to, the following supplementary notes.

### (Supplementary Note 1)

A radio access network (RAN) node apparatus comprising:
at least one memory; and
at least one processor coupled to the at least one memory and configured to:
   transmit to a User Equipment (UE), in a cell served by the RAN node apparatus, first information indicating a first network slice supported by another RAN node that can be used as a secondary node in dual connectivity in which the RAN node apparatus acts as a master node.

### (Supplementary Note 2)

The RAN node apparatus according to Supplementary Note 1, wherein the first network slice is not supported by the RAN node apparatus.

### (Supplementary Note 3)

The RAN node apparatus according to Supplementary Note 1 or 2, wherein the at least one processer is configured to broadcast in the cell the first information.

### (Supplementary Note 4)

The RAN node apparatus according to Supplementary Note 1 or 2, wherein the at least one processer is configured to transmit the first information to the UE via UE dedicated signaling.

### (Supplementary Note 5)

The RAN node apparatus according to any one of Supplementary Notes 1 to 4, wherein the at least one processor is configured to transmit, in addition to the first information, second information indicating a second network slice supported by the RAN node apparatus, in the cell to the UE.

### (Supplementary Note 6)

The RAN node apparatus according to any one of Supplementary Notes 1 to 5, wherein the first information is used by the UE for cell reselection by the UE.

### (Supplementary Note 7)

The RAN node apparatus according to any one of Supplementary Notes 1 to 6, wherein the first information allows the UE to perform cell reselection in a manner such that the cell of the RAN node apparatus, in which the first network slice can be provided by the secondary node of the dual connectivity, is preferentially selected over other cells.

### (Supplementary Note 8)

The RAN node apparatus according to any one of Supplementary Notes 1 to 7, wherein the first information allows the UE to include an identifier of the first network slice into a list of requested network slices in a registration request message to be transmitted from the UE to a core network via the RAN node apparatus.

### (Supplementary Note 9)

The RAN node apparatus according to any one of Supplementary Notes 1 to 8, wherein the first information allows the UE to request a core network to establish a new protocol data unit (PDU) session associated with the first network slice via the RAN node apparatus.

### (Supplementary Note 10)

The RAN node apparatus according to any one of Supplementary Notes 1 to 9, wherein the first information allows the UE to request a core network to activate an established protocol data unit (PDU) session associated with the first network slice via the RAN node apparatus.

### (Supplementary Note 11)

A User Equipment (UE) comprising:
at least one memory; and
at least one processor coupled to the at least one memory and configured to:
   receive, in a cell served by a first radio access network (RAN) node, first information indicating a first network slice supported by a second RAN node that can be used as a secondary node in dual connectivity in which the first RAN node acts as a master node.

### (Supplementary Note 12)

The UE according to Supplementary Note 11, wherein the first network slice is not supported by the first RAN node.

### (Supplementary Note 13)

The UE according to Supplementary Note 11 or 12, wherein the at least one processor is configured to, in consideration of the first information, perform at least one of cell reselection, a registration procedure, a protocol data unit (PDU) session establishment procedure, or a service request procedure, in or through the cell of the first RAN node.

### (Supplementary Note 14)

The UE according to Supplementary Note 13, wherein the at least one processor is configured to perform cell reselection in a manner such that the cell of the first RAN node, in which the first network slice can be provided by the secondary node of the dual connectivity, is preferentially selected over other cells.

### (Supplementary Note 15)

The UE according to Supplementary Note 13 or 14, wherein the at least one processor is configured to include an identifier of the first network slice into a list of requested network slices in a registration request message to be transmitted from the UE to a core network via the first RAN node.

### (Supplementary Note 16)

The UE according to any one of Supplementary Notes 13 to 15, wherein the at least one processor is configured to request a core network to establish a new protocol data unit (PDU) session associated with the first network slice via the first RAN node.

### (Supplementary Note 17)

The UE according to any one of Supplementary Notes 13 to 16, wherein the at least one processor is configured to request a core network to activate an established protocol data unit (PDU) session associated with the first network slice via the first RAN node.

### (Supplementary Note 18)

A method performed by a radio access network (RAN) node apparatus, the method comprising:
transmitting to a User Equipment (UE), in a cell served by the RAN node apparatus, first information indicating a first network slice supported by another RAN node that can be used as a secondary node in dual connectivity in which the RAN node apparatus acts as a master node.

### (Supplementary Note 19)

A method performed by a User Equipment (UE), the method comprising:
receiving, in a cell served by a first radio access network (RAN) node, first information indicating a first network slice supported by a second RAN node that can be used as a secondary node in dual connectivity in which the first RAN node acts as a master node.

### (Supplementary Note 20)

A non-transitory computer readable medium storing a program for causing a computer to perform a method for a radio access network (RAN) node apparatus, the method comprising:
transmitting to a User Equipment (UE), in a cell served by the RAN node apparatus, first information indicating a first network slice supported by another RAN node that can be used as a secondary node in dual connectivity in which the RAN node apparatus acts as a master node.

### (Supplementary Note 21)

A non-transitory computer readable medium storing a program for causing a computer to perform a method for a User Equipment (UE), the method comprising:
receiving, in a cell served by a first radio access network (RAN) node, first information indicating a first network slice supported by a second RAN node that can be used as a secondary node in dual connectivity in which the first RAN node acts as a master node.

This application is based upon and claims the benefit of priority from Japanese Patent Application No. 2020-067095, filed on April 2, 2020, the disclosure of which is incorporated herein in its entirety by reference.

### Reference Signs List

- 1: RAN node
- 2: RAN node
- 3: UE
- 4: AMF
- 1005: Memory
- 1006: Modules
- 1103: Baseband processer
- 1104: Application processer
- 1107: Modules
- 1203: Memory
- 1204: Modules

## Claims

1. A radio access network (RAN) node apparatus comprising:
at least one memory; and
at least one processor coupled to the at least one memory and configured to:
transmit to a User Equipment (UE), in a cell served by the RAN node apparatus, first information indicating a first network slice supported by another RAN node that can be used as a secondary node in dual connectivity in which the RAN node apparatus acts as a master node.

2. The RAN node apparatus according to claim 1, wherein the first network slice is not supported by the RAN node apparatus.

3. The RAN node apparatus according to claim 1 or 2, wherein the at least one processer is configured to broadcast in the cell the first information.

4. The RAN node apparatus according to claim 1 or 2, wherein the at least one processer is configured to transmit the first information to the UE via UE dedicated signaling.

5. The RAN node apparatus according to any one of claims 1 to 4, wherein the at least one processor is configured to transmit, in addition to the first information, second information indicating a second network slice supported by the RAN node apparatus, in the cell to the UE.

6. The RAN node apparatus according to any one of claims 1 to 5, wherein the first information is used by the UE for cell reselection by the UE.

7. The RAN node apparatus according to any one of claims 1 to 6, wherein the first information allows the UE to perform cell reselection in a manner such that the cell of the RAN node apparatus, in which the first network slice can be provided by the secondary node of the dual connectivity, is preferentially selected over other cells.

8. The RAN node apparatus according to any one of claims 1 to 7, wherein the first information allows the UE to include an identifier of the first network slice into a list of requested network slices in a registration request message to be transmitted from the UE to a core network via the RAN node apparatus.

9. The RAN node apparatus according to any one of claims 1 to 8, wherein the first information allows the UE to request a core network to establish a new protocol data unit (PDU) session associated with the first network slice via the RAN node apparatus.

10. The RAN node apparatus according to any one of claims 1 to 9, wherein the first information allows the UE to request a core network to activate an established protocol data unit (PDU) session associated with the first network slice via the RAN node apparatus.

11. A User Equipment (UE) comprising:
at least one memory; and
at least one processor coupled to the at least one memory and configured to:
receive, in a cell served by a first radio access network (RAN) node, first information indicating a first network slice supported by a second RAN node that can be used as a secondary node in dual connectivity in which the first RAN node acts as a master node.

12. The UE according to claim 11, wherein the first network slice is not supported by the first RAN node.

13. The UE according to claim 11 or 12, wherein the at least one processor is configured to, in consideration of the first information, perform at least one of cell reselection, a registration procedure, a protocol data unit (PDU) session establishment procedure, or a service request procedure, in or through the cell of the first RAN node.

14. The UE according to claim 13, wherein the at least one processor is configured to perform cell reselection in a manner such that the cell of the first RAN node, in which the first network slice can be provided by the secondary node of the dual connectivity, is preferentially selected over other cells.

15. The UE according to claim 13 or 14, wherein the at least one processor is configured to include an identifier of the first network slice into a list of requested network slices in a registration request message to be transmitted from the UE to a core network via the first RAN node.

16. The UE according to any one of claims 13 to 15, wherein the at least one processor is configured to request a core network to establish a new protocol data unit (PDU) session associated with the first network slice via the first RAN node.

17. The UE according to any one of claims 13 to 16, wherein the at least one processor is configured to request a core network to activate an established protocol data unit (PDU) session associated with the first network slice via the first RAN node.

18. A method performed by a radio access network (RAN) node apparatus, the method comprising:
transmitting to a User Equipment (UE), in a cell served by the RAN node apparatus, first information indicating a first network slice supported by another RAN node that can be used as a secondary node in dual connectivity in which the RAN node apparatus acts as a master node.

19. A method performed by a User Equipment (UE), the method comprising:
receiving, in a cell served by a first radio access network (RAN) node, first information indicating a first network slice supported by a second RAN node that can be used as a secondary node in dual connectivity in which the first RAN node acts as a master node.

20. A non-transitory computer readable medium storing a program for causing a computer to perform a method for a radio access network (RAN) node apparatus, the method comprising:
transmitting to a User Equipment (UE), in a cell served by the RAN node apparatus, first information indicating a first network slice supported by another RAN node that can be used as a secondary node in dual connectivity in which the RAN node apparatus acts as a master node.

21. A non-transitory computer readable medium storing a program for causing a computer to perform a method for a User Equipment (UE), the method comprising:
receiving, in a cell served by a first radio access network (RAN) node, first information indicating a first network slice supported by a second RAN node that can be used as a secondary node in dual connectivity in which the first RAN node acts as a master node.
